# EUROPÄISCHE PATENTSCHRIFT

(11) **EP 0 680 126 B1**
(45) Veröffentlichungstag und Bekanntmachung des Hinweises auf die Patenterteilung: **30.09.1998**
(21) Anmeldenummer: 95106108.4
(22) Anmeldetag: 24.04.1995
(51) Int. Cl.: H02G 3/16

(54) **Einbaudose**
Flush mounted box
Boîtier pour montage affleurant

(30) Priorität: 30.04.1994 DE 4415296
(43) Veröffentlichungstag der Anmeldung: 02.11.1995
(73) Patentinhaber: ABB PATENT GmbH, 68309 Mannheim (DE)
(72) Erfinder: Zapp, Robert, D-58579 Schalksmühle (DE)
(74) Vertreter: Rupprecht, Klaus, Dipl.-Ing.

(56) Entgegenhaltungen:
- DE-A- 4 225 326
- DE-C- 4 214 009
- GB-A- 748 284

## Beschreibung

Die Erfindung betrifft ein Installationsgerät für die Unterputz-Montage mit einem Sockel zur Aufnahme von Kontakten und Anschlußklemmen.

Die Montage von elektrischen Installationsgeräten erfolgt im Innenbereich von Gebäuden, z. B. im Wohnbereich oder in Büroräumen, üblicherweise in Unterputzmontage, d. h. quasi bündig mit der jeweiligen Montageoberfläche, wobei die zugehörigen Anschlußleitungen ebenfalls unter Putz gelegt sind. Um eine ausreichende Isolation der elektrischen Anschlüsse zu gewährleisten, werden sogenannte Einbaudosen aus Isoliermaterial, vorzugsweise einspritzfähiger Kunststoff, in die jeweiligen Montageöffnungen eingesetzt, welche in die entsprechenden Montageflächen eingelassen sind. Die Einbaudosen ihrerseits sind entsprechend für die Aufnahme der zur Montage vorgesehenen Installationsgeräte vorbereitet, deren Sockel mit Hilfe von Spreizklemmen darin mechanisch gehalten werden. Für den elektrischen Anschluß werden die betreffenden Installationsgeräte mit den üblicherweise Netzspannung von 230 V führenden Anschlußleitungen verbunden.

Inzwischen werden in zunehmendem Maße neben Versorgungsleitungen mit Netzspannung auch sogenannte Bus-Systeme, wie z. B. Europäischer Installationsbus, installiert, welche mit einer Kleinspannung, wie z. B. Schutzkleinspannung 30 V beim Europäischen Installationsbus, betrieben werden. Dabei besteht die generelle Forderung, daß stets eine definierte Trennung zwischen Stromkreisen, die an Netzspannung angeschlossen sind und solchen, die mit Buskleinspannung versorgt werden, gewährleistet ist. Innerhalb eines angeschlossenen Verbrauchergerätes ist dies verhältnismäßig einfach lösbar, wie Anwendungsfälle aus der Telekomunikationstechnik, z. B. Anrufbeantworter belegen. Außerhalb eines solchen Gerätes jedoch ist es besonders bei Kleingeräten schwierig, die geforderte Trennung durchgängig einzuhalten. Praktisch ausgeschlossen ist eine solche Trennung bei Geräten, die in eine Unterputz-Einbaudose eingebaut werden sollen, da sowohl für Netz- als auch für die Kleinspannung jeweils ein separater Anschlußraum gefordert ist.

Ein elektrisches Installationsgerät der eingangs genannten Art ist aus der DE-A-42 25 326 bekanntgeworden, bei welcher auf einem Sockel Komponenten des Versorgungsnetzes angeordnet sind. Komponenten eines BVS-Systems sind auf einem zweiten Sockel angeordnet, wobei die Sockel nebeneinander liegen.

Ausgehend von diesem Stand der Technik ist es Aufgabe der Erfindung ein Installationsgerät der eingangs genannten Art zu schaffen, welches die Möglichkeit bietet, innerhalb einer Einbaudose die Forderung nach voneinander getrennten Stromkreisen für Netzspannung und für Kleinspannung zu erfüllen.

Diese Aufgabe wird erfindungsgemäß durch die kennzeichnenden Merkmale des Anspruchs 1 gelöst. Danach ist vorgesehen, daß das Installationsgerät einen geteilten Sockel aufweist, daß jeweils ein Sockelteil einem Stromkreis unterschiedlicher Spannung zugeordnet ist und daß die Sockelteile im Abstand nebeneinander angeordnet sind. Ferner ist vorgesehen, daß der geteilte Sockel zusätzlich von einem Gehäuse aufgenommen ist, welches die Sockelteile zusätzlich gegeneinander isoliert. In diesem Fall wird das Gehäuse, welches zur Trennung der Sockelteile eine Trennwand aufweist, in die hierfür vorgesehene Unterputz-Wandeinbaudose eingesetzt, welche Unterputz-Wandeinbaudose den Anforderungen entsprechend ebenfalls Vorkehrungen zur elektrischen Trennung der Anschlußstromkreise unterschiedlicher Spannung aufweist, z. B. eine Trennwand, welche den Einbauraum den Erfordernissen entsprechend aufteilt.

Demgemäß sind die Sockelteile und die ihnen jeweils zugeordneten Anschlußklemmen und/oder Kontakte, die unterschiedliches Spannungsniveau aufweisen, elektrisch voneinander getrennt, so daß eine Störung der bestimmungsgemäßen Funktion sicher verhindert ist.

Das den geteilten Sockel aufnehmende Gehäuse des erfindungsgemäßen Installationsgerätes weist gemäß einer bevorzugten Ausführungsform zwischen zu trennenden Sockelteilen zwei Trennwände auf, die zwischen sich einen Spalt bilden, in welchen eine weitere Trennwand in einer Unterputz-Einbaudose eingreifen kann.

Mit Hilfe der Trennwand wird der Innenraum des Gehäuses in wenigstens zwei separate Bereiche unterteilt. Hierbei kann die Aufteilung, die durch die ebenfalls aus Isoliermaterial bestehende Trennwand erfolgt, so vorgesehen sein, daß zwei gleich große oder unterschiedlich große Räume gebildet sind, welche gegeneinander elektrisch völlig isoliert sind und damit die eingangs gestellte Forderung nach separaten Anschlußräumen klar erfüllen.

In vorteilhafter Weiterbildung der Erfindung ist die Trennwand fest mit dem Gehäuse verbunden um so sicher zu stellen, daß die geforderte Trennung der jeweiligen Anschlußräume voneinander nicht zufällig aufgehoben wird.

In weiterer Ausgestaltung der Erfindung kann vorgesehen sein, daß die im Sockelgehäuse durch die Trennwand geschaffenen, gegeneinander abgetrennten kammerartigen Räume entsprechend den Sockelteilen gleiche oder unterschiedliche Größe aufweisen.

Gemäß einer ausgewählten Ausführungsform der Erfindung kann vorgesehen sein, daß ein durch eine Trennwand abgetrennter Bereich mit einer Abschirmung versehen ist gegenüber dem anderen Bereich, um auf diese Weise Einflüsse durch ein elektromagnetisches oder elektrisches Feld zu verhindern.

Diese und weitere vorteilhafte Ausgestaltungen sind Gegenstand der Unteransprüche.

Anhand eines in einer Zeichnung dargestelltes Ausführungsbeispiels sollen die Erfindung, besondere Ausgestaltungen und Vorteile der Erfindung näher erläutert und beschrieben werden.

Es zeigen
- Fig. 1:: ein erfindungsgemäßes Installationsgerät in Seitenansicht
- Fig. 2:: die rückseitige Ansicht des Installationsgeräts nach Fig. 1

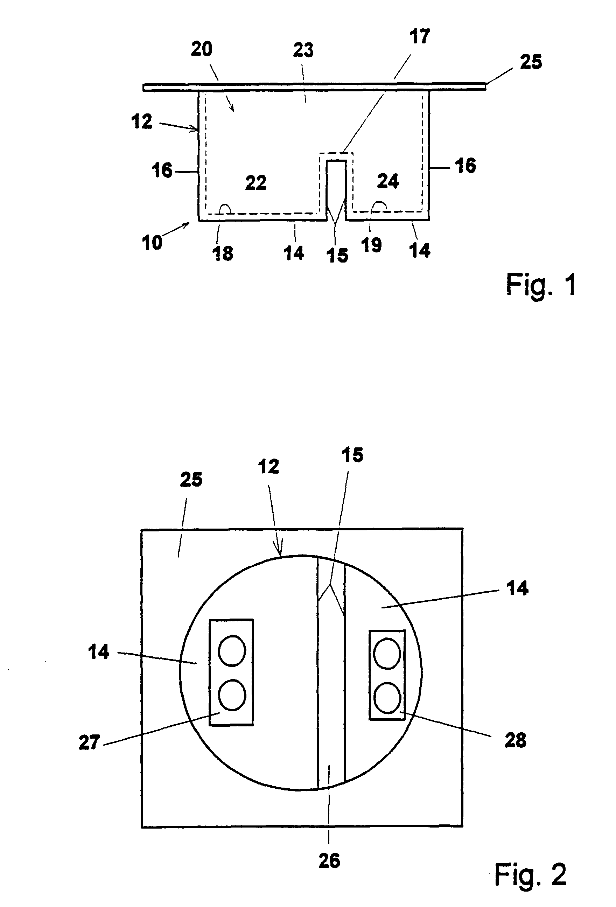

In Fig. 1 ist ein elektrisches Installationsgerät 10 in Seitenansicht dargestellt, welche ein topfähnliches Gehäuse 12 mit einem Boden 14 und Seitenwänden 15, 16 aufweist, in welches ein zweigeteilter Sockel 20 eingesetzt ist. Im gezeigten Ausführungsbeispiel insbesondere unter Einbeziehung der Darstellung gemäß Fig. 2, ist erkennbar, daß das Installationsgerät 10 einen an sich zylindrischen Gerätesockel 20 besitzt, dessen Innenraum durch zwei Trennwände 15 teilweise in zwei separate Anschlußräume 18, 19 unterteilt ist.

Die Trennwände 15 bestehen ebenso wie die Seitenwand 16 und der Boden 14 aus einem elektrisch isolierenden Werkstoff, z. B. Polystyrol, und sind einstückig mit der Seitenwand 16 und einem Steg 17 verbunden. Hierdurch ist gewährleistet, daß die beiden Kammern 18, 19 gegeneinander im unteren Teile elektrisch vollkommen isoliert sind.

In diese beiden Kammern 18, 19 greift der Sockel 20 mit seinen Sockelteilen 22, 24 durch ein Brückenteil 23 miteinander verbunden sind. Dieses Brückenteil korrespondiert mit dem Steg 17 und sorgt dafür, daß die beiden Sockelteile 22, 24 auf Abstand zueinander gehalten sind, um so elektrische Rückwirkungen des einen Stromkreises auf den benachbarten sicher zu verhindern und zwar auch ohne das zusätzliche Gehäuse 12, welches als Redunanz anzusehen ist und von Vorteil ist, wenn infolge Feuchtigkeit Kriechströme auftreten können.

Der Sockel 20 mit seinen Sockelteilen 22, 24 und dem Brückenteil sind an einem Tragring 25 befestigt, an welchem auch hier nicht näher dargestellte Spreizklemmen angeordnet sind, mittels welcher das Installationsgerät in der vorgesehenen Unterputz-Einbaudose verankert wird.

In Fig. 2 ist das Installationsgerät 10 von seiner Rückseite gezeigt, d. h. das Gehäuse 12 mit dem Bodenteil 14 und einem zwischen den beiden Kammern 18, 19 gebildeten, von den Trennwänden 15 begrenzten Spalt 26. Ferner sind Ausnehmungen 27, 28 zu erkennen, welche den Zugang zu an den Sockelteilen 12, 24 befindlichen Anschlußklemmen ermöglichen.

## Patentansprüche

1. Elektrisches Installationsgerät für die Unterputzmontage mit einem Sockel (20) zur Aufnahme von Kontakten und Anschlußklemmen, vorgesehen zum Einsatz in einer genormten Unterputz-Einbaudose, dadurch gekennzeichnet, daß das Installationsgerät (10) einen geteilten Sockel (20) aufweist, daß die Sockelteile (22, 24) Stromkreisen unterschiedlicher Spannung zugeordnet sind und daß die Sockelteile im Abstand nebeneinander angeordnet sind, daß die Sockelteile (22, 24) durch ein Brückenteil (23) miteinander mechanisch gekoppelt sind und daß das Installationsgerät (10) ein Gehäuse (12) besitzt, welches den Sockel (20) aufnimmt und für die Sockelteile (22, 24) separate Kammern (18, 19) aufweist, die durch Trennwände (15) voneinander getrennt sind.

2. Installationsgerät nach Anspruch 1, dadurch gekennzeichnet, daß jede Kammer (18, 19) des Gehäuses (12) ein Bodenteil (14) aufweist, das einstückig mit den Trennwänden (15) und Seitenwänden (16) verbunden ist.

3. Installationsgerät nach Anspruch 2, dadurch gekennzeichnet, daß jedes Bodenteil (14) eine Ausnehmung aufweist, durch welche der Zugang zu den im zugeordneten Sockelteil (22, 24) angeordneten Anschlußklemmen ermöglicht ist.

4. Installationsgerät nach einem der vorherigen Ansprüche, dadurch gekennzeichnet, daß das Gehäuse (12) einen Steg (17) aufweist, der mit den Trennwänden und der Seitenwand (16) einstückig ausgebildet ist und die Kammern (18, 19) miteinander verbindet.

5. Installationsgerät nach einem der vorherigen Ansprüche, dadurch gekennzeichnet, daß das Gehäuse (12) an seiner Rückseite eine spaltförmige Einformung aufweist.

6. Installationsgerät nach Anspruch 5, dadurch gekennzeichnet, daß die spaltförmige Einformung von den Trennwänden (15) zur Abtrennung der separaten Bereiche begrenzt ist.

7. Installationsgerät nach Anspruch 5 oder 6, dadurch gekennzeichnet, daß die spalfförmige Einformung eine in der zum Einbau vorgesehenen Unterputz-Einbaudose angeordnete Trennwand übergreift.

8. Installationsgerät nach einem der vorherigen Ansprüche, dadurch gekennzeichnet, daß das den Sockel (29) aufnehmende Gehäuse (12) eine an den Querschnitt der zum Einbau vorgesehene Unterputz-Einbaudose angepaßte Kontur aufweist.

## Claims

1. Electrical service device for flush mounting having a base (20) for accommodating contacts and connecting terminals, intended for use in a standard flush-mounted box, characterized in that the service device (10) has a split base (20), in that the base parts (22, 24) are allocated to circuits at different voltages, and in that the base parts are arranged spaced apart alongside one another, in that the base parts (22, 24) are mechanically coupled to one another by a bridge part (23), and in that the service device (10) has a housing (12) which accommodates the base (20) and has separate chambers (18, 19) for the base parts (22, 24), which chambers (18, 19) are separated from one another by partition walls (15).

2. Service device according to Claim 1, characterized in that each chamber (18, 19) in the housing (12) has a bottom part (14) which is integrally connected to the partition walls (15) and side walls (16).

3. Service device according to Claim 2, characterized in that each bottom part (14) has a recess through which access is possible to the connecting terminals which are arranged in the associated base part (22, 24).

4. Service device according to one of the preceding claims, characterized in that the housing (12) has a web (17) which is formed integrally with the partition walls and the side wall (16) and connects the chambers (18, 19) to one another.

5. Service device according to one of the preceding claims, characterized in that, on its rear side, the housing (12) has an indentation in the form of a slot.

6. Service device according to Claim 5, characterized in that the indentation in the form of a slot is bounded by the partition walls (15) for separating the separate areas.

7. Service device according to Claim 5 or 6, characterized in that the indentation in the form of a slot engages over a partition wall which is arranged in the flush-mounted box that is intended for flush mounting.

8. Service device according to one of the preceding claims, characterized in that the housing (12) which accommodates the base (29) has a contour which is matched to the cross-section of the flush-mounted box which is intended for flush mounting.

## Revendications

1. Appareil d'installation électrique pour montage affleurant comportant un socle (20) desiné à recevoir des contacts et des bornes de connexion, prévu pour être utilisé dans des boîtes d'encastrement normalisées, caractérisé par le fait que l'appareil d'installation (10) présente un socle (20) divisé, par le fait que les parties de socle (22, 24) sont associées à des circuits électriques avec des tensions différentes, par le fait que les parties de socle sont disposées côte à côte à distance l'une de l'autre, par le fait que les parties de socle (22, 24) sont couplées mécaniquement l'une à l'autre par une parie formant pont (23) et par le fait que l'appareil d'installation (10) comporte un corps (12) qui reçoit le socle (20) et présente pour les parties de socle (22, 24) des chambres (18, 19) distinctes qui sont séparées l'une de l'autre par des parois de séparation (15).

2. Appareil d'installation selon la revendication 1, caractérisé par le fait que chaque chambre (18, 19) du corps (12) présente un fond (14) qui est lié d'une pièce aux parois de séparation (15) et aux parois latérales (16).

3. Appareil d'installation selon la revendication 2, caractérisé par le fait que chaque fond (14) présente une découpe par laquelle l'accès aux bornes de connexion disposées dans la partie de socle (22, 24) concernée est rendu possible.

4. Appareil d'installation selon une des revendications précédentes, caractérisé par le fait que le corps (12) présente une barrette (17) qui est formée d'une pièce avec les parois de séparation et la paroi latérale (16) et relie entre elles les chambres (18, 19).

5. Appareil d'installation selon une des revendications précédentes, caractérisé par le fait que le corps (12), sur sa face arrière, présente un creux en forme de fente.

6. Appareil d'installation selon la revendication 5, caractérisé par le fait que le creux en forme de fente est délimité par les parois de séparation (15) qui séparent les chambres distinctes.

7. Appareil d'installation selon la revendication 5 ou 6, caractérisé par le fait que le creux en forme fente chevauche une paroi de séparation dans la boîte d'encastrement prévue pour le montage.

8. Appareil d'installation selon une des revendications précédentes, caractérisé par le fait que le corps (12) qui reçoit le socle (29) présente une forme extérieure adaptée à la section de la boîte d'encastrement prévue pour le montage.
